(19)

Europäisches
Patentamt
European
Patent Office
Office européen
des brevets

(11) **EP 2 424 227 A2**

(12) **EUROPEAN PATENT APPLICATION**

(43) Date of publication:
**29.02.2012 Bulletin 2012/09**

(51) Int Cl.:
***H04N 5/235*** *(2006.01)*

(21) Application number: **11178310.6**

(22) Date of filing: **22.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.08.2010 JP 2010188605**

(71) Applicant: **Ricoh Company Ltd.
Tokyo 143-8555 (JP)**

(72) Inventor: **Watanabe, Yoshikazu
Tokyo 143-8555 (JP)**

(74) Representative: **Hopkin, Tobias J.B.
J.A. Kemp & Co.
14 South Square
Gray's Inn
London
WC1R 5JJ (GB)**

(54) **Imaging apparatus, sky-area determining method, and a sky-area determining program**

(57)    An imaging apparatus includes an imaging unit converting incident light into an image signal; an evaluation value detecting unit dividing the image signal into plural areas and detecting an evaluation value of a pixel value of each of the areas; an imaging information acquiring unit acquiring imaging position information and an imaging date/time of the image signal; a sky-area pixel value estimating unit estimating pixel value information of a sky area of a daytime based on the imaging position information and the imaging date/time; and a sky-area determination unit comparing the evaluation value of each of the plural areas with the pixel value information to determine whether the area corresponds to the sky area.

FIG.1

```
        START
          │
          ▼
  ENTER SETTINGS            ─ S1
 (LOCATION, SEASON, TIME)
          │
          ▼
DETERMINE BRIGHTNESS RANGE  ─ S2
          │
          ▼
  DETERMINE SKY AREA        ─ S3
          │
          ▼
  COUNT SKY AREAS           ─ S4
          │
          ▼
DETERMINE LANDSCAPE SCENE   ─ S5
          │
          ▼
         END
```

**Description**

BACKGROUND OF THE INVENTION

1. Field of the Invention

The present invention relates to an imaging apparatus for imaging an object, particularly an imaging apparatus capable of determining an imaged scene, a sky-area determining method, and a sky-area determining program.

2. Description of the Related Art

Attempts have been made to improve operability of a camera by determining a photographed scene based on an imaging signal of image data obtained by the camera. For example, a technology determines the photographed scene based on the distribution of luminance in the imaging signal (see Japanese Laid-open Patent Publication No. 2009-147520 ("Patent Document 1"), for example). Patent Document 1 discloses a scene estimating apparatus that detects a high-luminance ratio and a low-luminance ratio in each of divided areas of a screen. An evaluation value for each of the high-luminance ratio and the low-luminance ratio is calculated and compared with a reference value to determine the type of scene, such as a white background scene, a backlight scene, a spotlight scene, a green background scene, or a night view scene.

In a method of determining a landscape scene, an image is searched for a sky area. For example, an imaging signal of image data obtained with a camera is searched for the sky area, and an image process adapted to the sky area is performed (see Patent Document 1) or Japanese Laid-open Patent Publication No. 2009-89357 ("Patent Document 2"), for example). Patent Document 1 discusses a sky determining method whereby an input image is divided into blocks on an RGB basis. Those of the blocks whose luminance Y and a color difference B-Y are greater than predetermined values are determined to correspond to image areas indicating the sky. The blocks corresponding to the sky are utilized for backlight correction and the like.

Patent Document 2 discusses a sky determining method that detects the sunset glow when a color corresponding to the sunset glow is measured with a color sensor in a sunset time band. Upon detection of the sunset glow, the white balance of an image signal obtained with an imaging element is controlled such that red is emphasized.

Even prior to the advent of such photographed scene determining technology, sky area detection has been performed for exposure compensation or AWB (automatic white balance) compensation.

However, when detection is based on a particular color, as according to Patent Document 2 or Japanese Laid-open Patent Publication No. 2008-219128 ("Patent Document 3"), it is possible that an area that does not correspond to the sky may be erroneously determined to be a sky area. For example, in the case of Patent Document 2, a subject with merely a bluish tint may be determined to correspond to the sky. In the case of Patent Document 3, a subject with merely a reddish tint may be determined to correspond to the sky.

SUMMARY OF THE INVENTION

In view of the foregoing, it is a general object of the present invention to provide an imaging apparatus, a sky-area determining method, and a sky-area determining process by which the sky area can be accurately detected so that the accuracy of determination of the photographed scene can be increased.

In one aspect of the present invention, an imaging apparatus includes an imaging unit for converting incident light into an image signal; an evaluation value detecting unit for dividing the image signal into plural areas and detecting an evaluation value of a pixel value of each of the areas; an imaging information acquiring unit for acquiring imaging position information and an imaging date/time of the image signal; a sky-area pixel value estimating unit for estimating pixel value information of a sky area of a daytime based on the imaging position information and the imaging date/time; and a sky-area determination unit for comparing the evaluation value of each of the plural areas with the pixel value information to determine whether the area corresponds to the sky area.

In another aspect, a sky-area determining method includes an imaging unit converting incident light into an image signal; an evaluation value detecting unit dividing the image signal into plural areas and detecting an evaluation value for a pixel value of each of the areas; an imaging information acquiring unit acquiring imaging position information and imaging date/time of the image signal; a sky-area pixel value estimating unit estimating pixel value information of a sky area of a daytime based on the imaging position information and the imaging date/time by; and a sky-area determination unit comparing the evaluation value of each of the plural areas with the pixel value information and determining whether the area corresponds to the sky area.

In another aspect, a sky-area determining program causes a computer to which an imaging unit for converting incident light into an image signal and an evaluation value detecting unit for dividing the image signal into plural areas and detecting an evaluation value of a pixel value of each of the areas are connected to perform an imaging information acquiring step of acquiring imaging position information and an imaging date/time of the image signal; a sky-area pixel value estimating step of estimating pixel value information of a sky area of a daytime based on the imaging position information and the imaging date/time; and a sky area determining step of comparing the evaluation value of each of the plural areas with the pixel value information and determining whether the area corresponds to the sky area.

In accordance with an embodiment of the present invention, an imaging apparatus is provided by which the sky area can be accurately detected, thus increasing the accuracy of determination of a photographed scene.

BRIEF DESCRIPTION OF THE DRAWINGS

FIG. 1 is a flowchart of a process for determining a sky area according to an embodiment;
FIG. 2 is a hardware block diagram of a digital still camera apparatus;
FIG. 3 is a hardware block diagram of a system control unit;
FIG. 4 is a functional block diagram of the digital still camera apparatus;
FIG. 5 is a flowchart of a process in which the digital still camera apparatus determines a blue sky area and further determines a landscape scene based on the size (or proportion) of the sky area;
FIG. 6 illustrates an example of an imaging area of a monitoring image;
FIG. 7 illustrates an example of a brightness range table;
FIG. 8 is a functional block diagram of a digital still camera apparatus according to another embodiment;
FIG. 9 is a flowchart of a process in which the digital still camera apparatus of FIG. 8 determines a blue sky area and a sunset-glow sky area and determines a landscape scene based on the size (or proportion) of the sky area;
FIG. 10 illustrates an example of a color range setting table;
FIG. 11 illustrates an example of a color range combination setting table;
FIG. 12 is a functional block diagram of a digital still camera apparatus according to another embodiment;
FIG. 13 is a flowchart of a process in which the digital still camera apparatus of FIG. 12 determines a blue sky area and a sunset-glow sky area and determines a landscape scene based on the size (or proportion) of the sky area; and
FIG. 14 illustrates an example of a brightness/color range setting table.

DETAILED DESCRIPTION OF THE PREFERRED EMBODIMENTS

Embodiments of the present invention are described with reference to the attached drawings.

Embodiment 1

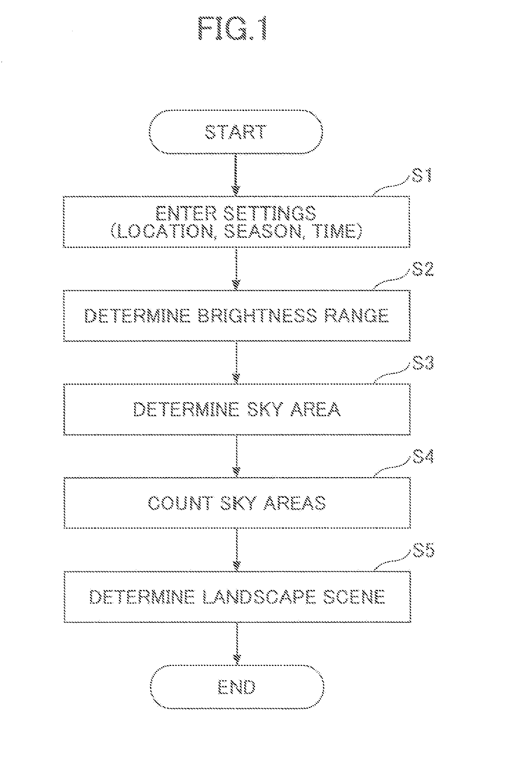

FIG. 1 is a flowchart of a sky determination process. First, a digital still camera apparatus receives various settings (such as a region setting, a language setting, a date setting, and a time setting) (S1) .

Based on the various settings, the brightness of the sky that would be photographed by the digital still camera apparatus at the instantaneous moment and location is estimated (S2).

Next, the digital still camera apparatus compares an image signal captured by imaging with a predetermined sky color with respect to each of plural areas of the image signal (which includes a collection of entire pixel values which may also be referred to as "image data") in order to determine whether the areas correspond to a sky area (S3). The "sky" according to the present embodiment is intended to mean the sky during daytime (from sunrise to sunset) and does not include the night sky.

The digital still camera apparatus then counts the number of areas that are determined to be sky areas (S4).

Based on the number of the areas determined to be the sky areas, the digital still camera apparatus determines whether the captured image is a landscape scene (S5).

Thus, the brightness of the sky is estimated from the settings at the time of photography, so that the accuracy of determining the sky area can be improved. For example, an erroneous determination of a bright subject photographed in the dark as being a sky area can be reliably prevented.

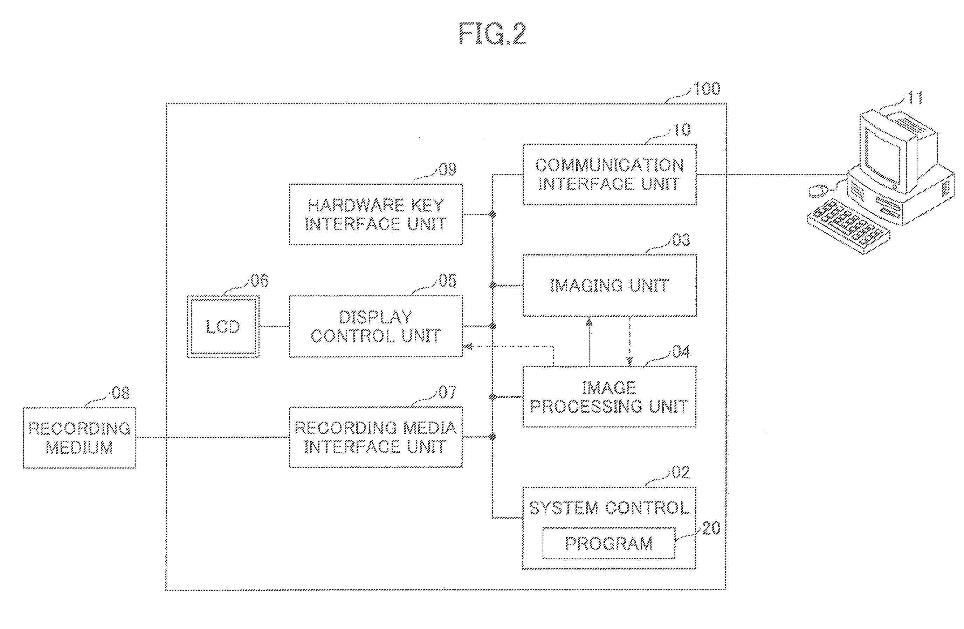

FIG. 2 is a hardware block diagram of a digital still camera apparatus 100. The illustrated configuration of the apparatus is not much different from those of the cameras according to the related art. The digital still camera apparatus 100 according to the present embodiment is characterized by the features relating to its process contents.

The digital still camera apparatus 100 includes a LCD 06, a hardware key interface unit 09, a display control unit 05, a recording medium interface unit 07, a communication interface unit 10, an imaging unit 03, an image processing unit 04, and a system control unit 02. The main blocks are connected via a bus.

The imaging unit 03 may include an imaging element that performs photoelectric conversion. The imaging unit 03 may also include optical components (such as a lens, a lens drive motor, and a diaphragm), a CCD with the Bayer arrangement, a CCD drive circuit, and an A/D converter.

The image processing unit 04 may perform various image processes on an image signal obtained by the imaging unit 03, or control the timing of driving the CCD or the lens drive motor of the imaging unit 03 in order to adjust zooming, focusing, or exposure. The image processing unit 04 may include an image processing DSP (digital signal processor) and a RAM for image compression and expansion.

The display control unit 05 performs a signal process on the image signal processed by the image processing unit 04 so that the signal can be displayed on the LCD 06. The display control unit 05 may also generate various graphic images or letters that are displayed by the LCD 06 for user interface by using a D/A converter or an on-screen display controller.

The LCD 06 may display a captured image and graphics for a user interface. The recording medium interface unit 07 provides an interface with the recording medium 08 and may include a memory card controller for accessing the recording medium 08 for reading or writing of data.

The recording medium 08 may include a detachable portable nonvolatile memory (such as a flash memory) capable of storing compressed image signals or various information about an image in a predetermined format. The hardware key interface unit 09 detects the status of a user interface such as keys or dials (not illustrated). The hardware key interface unit 09 may include a sub-CPU for controlling a main power supply for the CPU 201 of the system control unit 02.

The communication interface unit 10 may include a communication controller for connection of a USB for data communication so that an imaging signal can be received from or transmitted to an external device.

As an example of the external device, a PC (Personal Computer) 11 is connected to the digital still camera apparatus 100. The PC 11 may receive an image from the digital still camera apparatus 100 and reproduce the image on a display, or make various settings in the digital still camera apparatus 100. Preferably, a printer may be connected to the digital still camera apparatus 100 for direct printing. Connection with such external devices may be based on a wireless technology such as Bluetooth™.

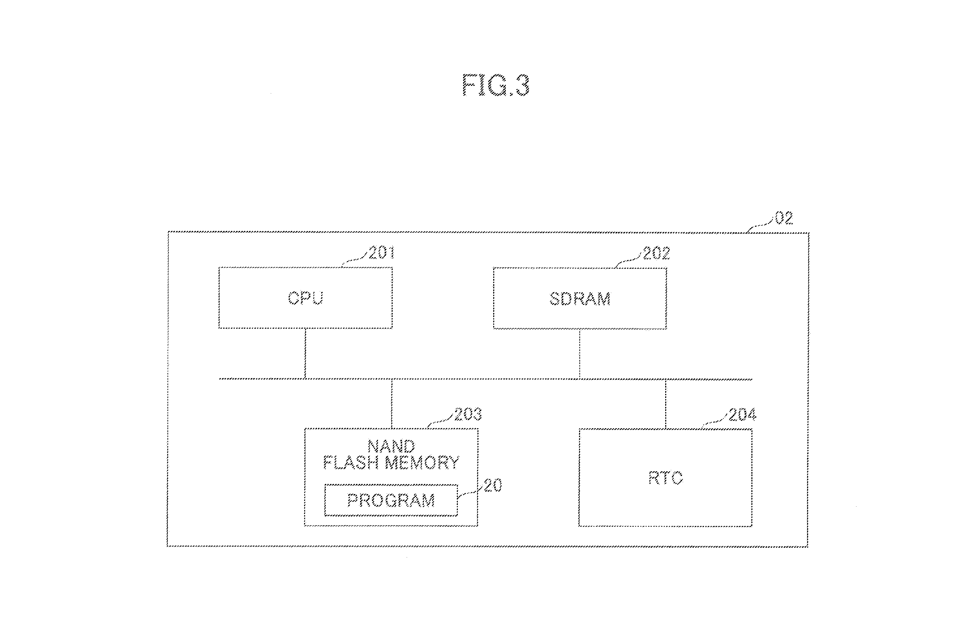

FIG. 3 is a hardware block diagram of the system control unit 02. The system control unit 02 controls the digital still camera apparatus 100 as a whole. The system control unit 02 includes a CPU 201, a NAND flash memory 203, a SDRAM 202, and a clock (RTC) 204, which are connected via a bus. The system control unit 02 may also include an I/O unit or an ASIC (application specific integrated circuit). The NAND flash memory 203 stores a program 20 executed by the CPU 201 and may also store one or more setting values (not illustrated) and a brightness range table.

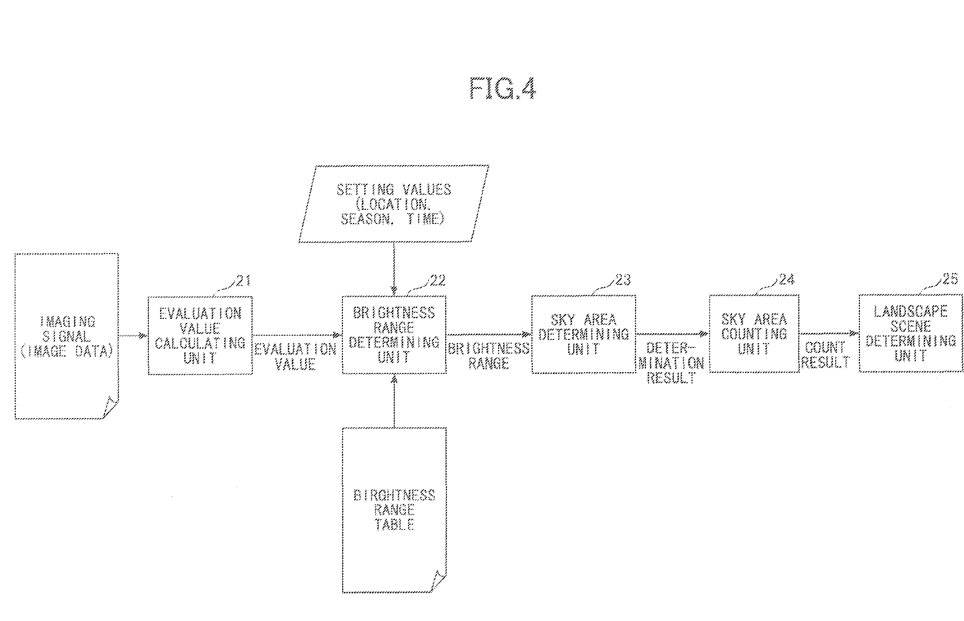

FIG. 4 is a functional block diagram of the digital still camera apparatus 100 according to the present embodiment. The setting values and the brightness range table are stored in the NAND flash memory 203. It is not particularly important which function is implemented by which hardware unit. In the illustrated example, the evaluation value calculating unit 21 is implemented by the image processing unit 04 and the other units are implemented by the system control unit 02. The system control unit 02 may realize the illustrated functions when the program 20 stored in the NAND flash memory 203 is executed by the CPU 201. The details of the functions will be described later with reference to a flowchart.

The evaluation value calculating unit 21 divides an image of an imaging signal into areas and calculates an evaluation value (average values of R, G, and B) for each of the areas. The brightness range determining unit 22 acquires from the brightness range table a brightness range corresponding to the setting values read from the NAND flash memory 203. The sky-area determining unit 23 compares the evaluation value with the brightness range on an area by area basis, and determines whether the area is a sky area. The sky area counting unit 24 counts the number of the areas determined to correspond to the sky. Based on the number of the areas determined to correspond to the sky, the landscape scene determining unit 25 determines whether the photographed scene is a landscape.

(Startup Operation)

A startup operation of the digital still camera apparatus 100 may be similar to those of digital still camera apparatuses according to the related art.

When a user presses a power supply button (not illustrated), the hardware key interface unit 09 starts supplying power to the CPU 201 of the system control unit 02.

The CPU 201 starts accessing (program execution) from a boot portion of the NAND flash memory 203, and then transfers program data to the SDRAM 202 by using a boot program.

Upon completion of transfer to the SDRAM 202, the CPU 201 sets an execution pointer (program counter) of the program 20 to the program 20 (i.e., its address) on the SDRAM 202, and thereafter starts a startup process by using the program 20 on the SDRAM 202.

The startup process may include initialization of an OS (operating system), a process for moving out a lens barrel, and initialization of the recording medium 08. The process of moving out the lens barrel may be performed by the CPU 201 supplying a pulse signal to the lens drive motor of the imaging unit 03 via the image processing unit 04 at predetermined intervals (such as 2 ms). Initialization of the recording medium 08 may involve the CPU 201 supplying power and a clock to the recording medium 08 via the recording medium interface unit 07 and then issuing an initialization command to the recording medium 08. Actual initialization may be performed within the recording medium 08. The system control unit 02 may poll the status of the recording medium 08 at intervals of 10 ms in order to detect completion of initialization.

Prior to taking a picture (such as immediately after the purchase of the camera, or during a trip), the user may set the region where the camera is used or the current date/time by operating various keys or dials (not illustrated). Alternatively, information about the region or the current date/time may be obtained via radio waves from a measuring satellite.

The contents of an operation made by the user are received by the hardware key interface unit 09 and then determined by the system control unit 02. In response to the operation, the system control unit 02 may generate guidance graphics and send them to the display control unit 05 in order to prompt the user to enter the next operation.

The system control unit 02 stores the set region in the NAND flash memory 203 so that the subsequently generated guidance graphics can be displayed in a language corresponding to the set region.

The set date/time is set in the clock (RTC 204), and the system control unit 02 starts counting time by using an internal clock.

(Photography operation)

A photography operation is described. The user operates the various keys or dials (not illustrated) to determine a photography mode (such as a high-image-quality mode or a low-image-quality mode).

The contents of an operation made by the user are received by the hardware key interface unit 09 and then determined by the system control unit 02. In response to the operation, the system control unit 02 generates guidance graphics and sends the guidance graphics to the display control unit 05 in order to prompt the user to perform a next operation.

After the photography mode is determined, the system control unit 02 sets one or more process parameters corresponding to the selected mode in the image processing unit 04.

The user may also operate a zoom lever (not illustrated) to determine an angle of view (composition) as needed. The contents of such operation made by the user are received by the hardware key interface unit 09 and then determined by the system control unit 02. In response to the operation, the system control unit 02 may control the imaging unit 03 to drive a lens.

Under the control of the image processing unit 04, the imaging unit 03 starts an imaging operation for displaying a monitoring image on the LCD 06 prior to the actual taking of a picture. Imaging signals recorded by the imaging unit 03 are successively sent to the image processing unit 04. The image processing unit 04 calculates an evaluation value for a signal process or an exposure control. The image process unit 04 may also perform processes for color space transform, gamma correction, white balance adjustment, or contrast adjustment before sending the imaging signal to the display control unit 05.

The display control unit 05 subjects the imaging signal to signal processing and displays a resultant image on the LCD 06, thus presenting the user with an imaging status.

When the user presses a release button (not illustrated), the operation is received by the hardware key interface unit 09 and then determined by the system control unit 02, as in the case of mode setting.

The imaging unit 03, under the control of the image processing unit 04, acquires a captured imaging signal and sends it to the image processing unit 04. The image processing unit 04 may perform an image process or a compression process depending on the photography mode.

The system control unit 02 reads compressed image data from the RAM in the image processing unit 04, adds header information to the data, and writes the data in the recording medium 08 via the recording medium interface unit 07, thus completing a series of the photography operation.

(Determination of blue sky area)

Next, determination of a blue sky area and a landscape scene as features of the present embodiment is described.

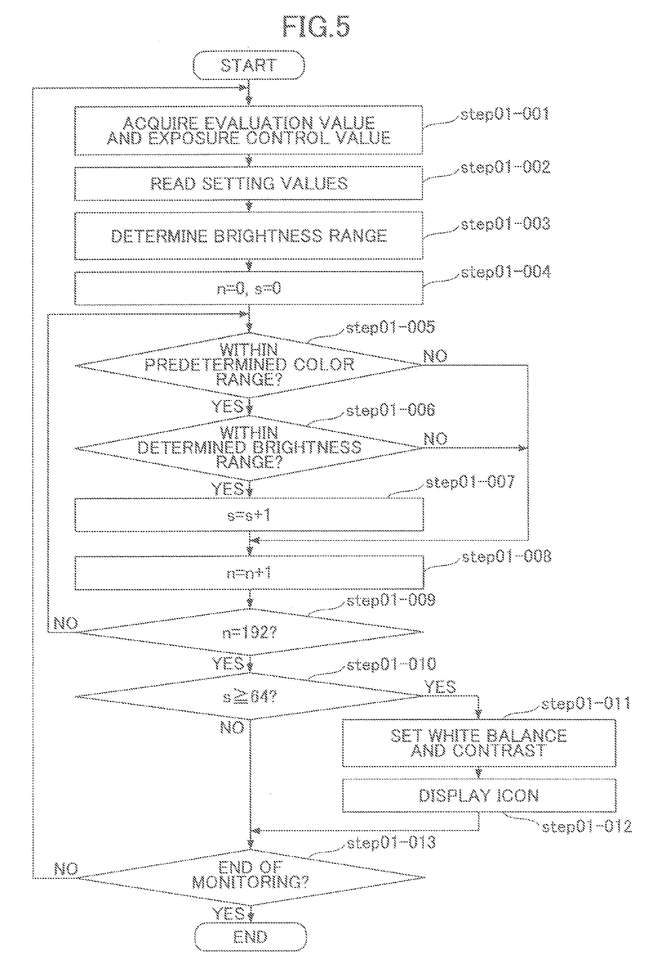

FIG. 5 is a flowchart of a process in which the digital still camera apparatus 100 may determine a blue sky area and then determine a landscape scene based on the size or proportion of the sky area. The determination of the blue sky area and the landscape scene based on the determination of the blue sky area is performed during monitoring. Thus, the flowchart of FIG. 5 illustrates an operation during monitoring.

When the image processing unit 04 starts a monitoring operation and sends an imaging signal to the display control unit 05, the system control unit 02 acquires an evaluation value and current exposure control values (such as an exposure time, an aperture value, and an ISO sensitivity) from the image processing unit 04 (step 01-001).

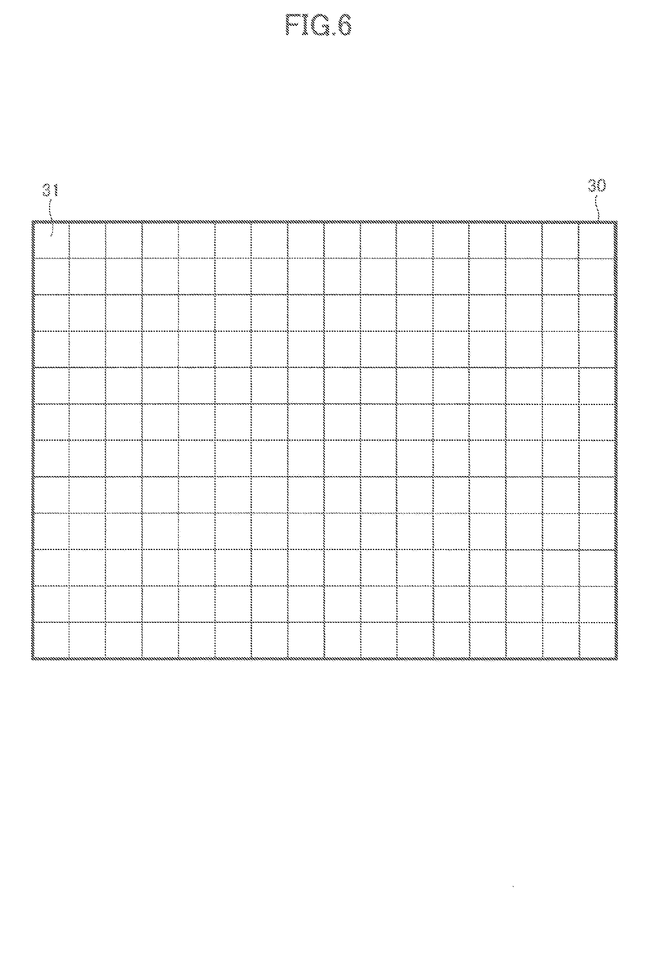

The evaluation value will now be described. FIG. 6 illustrates an example of an imaging area 30 of a monitoring image. The evaluation value calculating unit 21 of the image processing unit 04 divides the imaging area 30 into plural areas as illustrated, and calculates an evaluation value for each area. Blocks 31 in FIG. 6 correspond to the individual areas to which the evaluation values are allocated.

In the illustrated example, the imaging area 30 is divided into 16 horizontal times 12 vertical areas, for a total of 192 areas. The evaluation value for each area includes an average value of R pixel values, an average value of G pixel values, and an average value of B pixel values, each average value ranging from 0 to 1023, as indicated below:

$$\text{Evaluation value} = (\text{average value of R pixel values, average value of G pixel values, and average value of B pixel values})$$

The evaluation value is used for determining whether the blocks 31 correspond to a blue sky area. The above-described number of divided areas is merely an example and may be increased or decreased by reducing or increasing the size of the areas.

Thereafter, the system control unit 02 reads a set region from the NAND flash memory 203 and the current date/time from the clock (RTC 204) (step 01-002) .

The brightness range determining unit 22 of the system control unit 02 then determines a brightness range based on the read region and date/time by referring to a brightness range table (step 01-003).

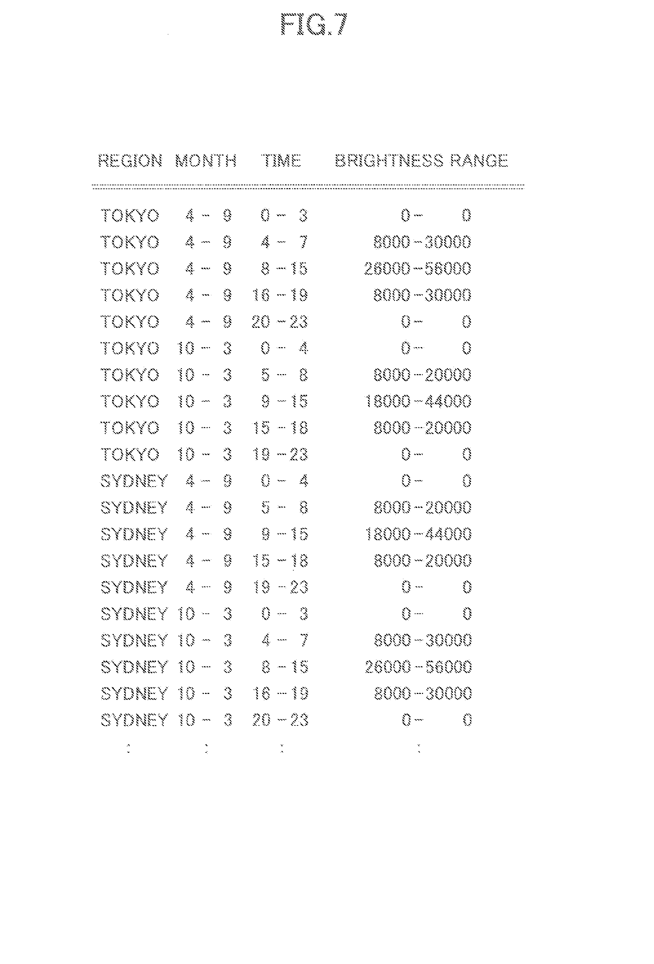

FIG. 7 illustrates an example of the brightness range table. The brightness range table may be stored in the system control unit 02 in advance, downloaded from a server (not illustrated), or installed via a recording medium.

The brightness range table registers "brightness range" in association with "region", "month" (season information), and "time".

The "region" indicates the region setting (which is a city name in the present embodiment) stored in the NAND flash memory 203. The "month" indicates the month according to the date/time information. The "time" indicates the time according to the date/time information counted by the clock (RTC 204). The "brightness range" indicates the range of brightness determined by the region, the month, and the time. The brightness range is an indication of the brightness of the sky in the corresponding region, month, and time band. The brightness range may be calculated by the same calculation method as for calculating an area brightness E which will be described later. Thus, the unit of the brightness range values may be determined by an expression for determining brightness from RGB values.

The brightness range table registers smaller (meaning darker) values for the time bands close to the sunrise or sunset in a given region at the time of photography, and larger (meaning brighter) values for the daytime.

The brightness range table registers the value "0-0" when the time of photography is the night between sunset and sunrise. This prevents the sky-area determining unit 23 from erroneously detecting a bright subject as corresponding to the sky of the daytime during a determination process which will be described later.

The brightness range table also registers smaller values when the month in which the user takes a picture corresponds to the winter and greater values when the month corresponds to the summer in a given region. The brightness range determining unit 22 reads the brightness range corresponding to the set region and the current date/time from the brightness range table.

The brightness range table may not register the brightness range on a monthly (season information) basis and yet the daytime may be roughly distinguishable from the nighttime.

Referring back to FIG. 5, the sky area counting unit 24 of the system control unit 02 initializes a number "n" of the entire areas and a number "s" of the areas determined to correspond to the sky in order to determine whether the imaging signal corresponds to the sky on an area by area basis (step 01-004).

The sky-area determining unit 23 also determines whether the color of the area is within a color range that indicates the blue sky from the evaluation value obtained in step 01-001 (step 01-005).

For example, the area is determined to be within the color range of the blue sky when a result of calculation of "average value of G pixels / average value of R pixels" is within a range of 0.8 and 1.2 and a result of calculation of "average value of G pixels / average value of B pixels" is within a range of 2.1 and 2.3.

Such color ranges represent colors that may be determined to substantially correspond to the blue sky. Preferably, a color range that indicates the sky color with sunset glow may be set in advance and then it may be determined whether the color of the area is within the color range indicating the sky with sunset glow.

Similarly, the sky-area determining unit 23 of the system control unit 02 determines, from the evaluation value obtained in step 01-001, whether the brightness of the area is within the range of brightness corresponding to the blue sky according to the brightness range table (step 01-006).

Brightness E of the area may be determined by the following expression:

$$E=((\text{average value of R pixels} \times 3 + \text{average value of G pixels} \times 6 + \text{average value of B pixels}) / 10) \times (\text{inverse of exposure time}) \times (\text{aperture value (F number)}) \times (\text{aperture value (F number)}) / (\text{ISO sensitivity})$$

This corresponds to determining the brightness of the subject by analogy by correcting the brightness of each of the areas of the imaging signal captured by the imaging unit 03 in accordance with the exposure control value.

The sky-area determining unit 23 of the system control unit 02 determines whether the value of brightness E is within the values of the brightness range obtained from the brightness range table on an area by area basis. When the color of the area is within the predetermined range indicating the blue sky (step 01-005) and the brightness of the area is within the brightness range indicating the blue sky according to the brightness range table (step 01-006), the sky area counting unit 24 of the system control unit 02 determines that the area corresponds to the sky and increments the value of "s" by one (step 01-007).

Thus, instead of using a fixed brightness range, a brightness range that is varied depending on the location and the date/time of photography is used, so that the areas corresponding to the sky can be accurately determined.

The sky area counting unit 24 increments the value of n each time an area is determined (step 01-008). The system control unit performs the process of steps 01-005 through 01-008 for each of the 192 areas (step 01-009).

When the color determination and the brightness determination have been performed for all of the areas ("Yes" in step 01-009), the landscape scene determining unit 25 of the system control unit 02 determines whether the resultant number "s" of the sky areas is equal to or more than the predetermined value 64 (step 01-010).

This is in order to determine whether the number of the areas estimated to correspond to the sky is equal to or more than one third of the entire areas. The ratio of 1/3 is an example in consideration of the area occupied by the sky. The ratio may be varied between 1/5 and 1/2.

When the result of determination indicates that the number "s" of the sky areas is 64 or more ("Yes" in step 01-010), the landscape scene determining unit 25 determines that the photographed scene is a landscape scene. Then, the system control unit 02 sets white balance and contrast values suitable for the landscape photography in the image processing unit 04 (step 01-011). The system control unit 02 also causes the display control unit 05 to display guidance graphics (icons) indicating to the user that the photographed scene is a landscape scene (step 01-012).

The system control unit 02 continues the above operation until monitoring ceases (step 01-013).

Thus, in accordance with the present embodiment, the digital still camera apparatus 100 makes the determination concerning the estimation of the sky area based on the brightness range of the sky depending on the location (region), season (month), and time of photography instead of a fixed brightness range. Thus, whether a captured image contains the sky can be accurately determined.

Because the brightness range is set to "0-0" in the nighttime bands, erroneous detection of a bright subject as corresponding to the sky area can be prevented.

Embodiment 2

The digital still camera apparatus 100 according to Embodiment 2 determines the blue sky and the sunset glow of sky in accordance with an estimated color range, and further determines a landscape scene based on the size or proportion of the sky area. The hardware structure and the starting up and photography operations are similar to those of Embodiment 1 and therefore their description is omitted.

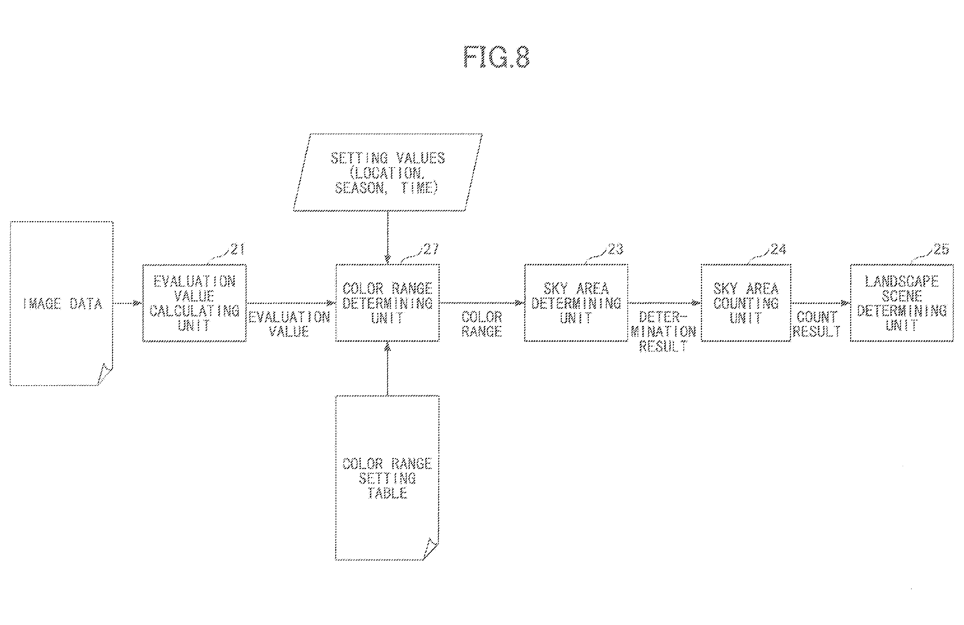

FIG. 8 is a functional block diagram of the digital still camera apparatus 100 according to the present embodiment. In FIG. 8, parts similar to those of FIG. 4 (Embodiment 1) are not described. The present embodiment differs from Embodiment 1 in that the brightness range table (FIG. 7) is replaced with a color range setting table and the brightness range determining unit 22 is replaced with a color range determining unit 27.

The color range determining unit 27 acquires from the color range setting table a color range corresponding to a setting value read from the NAND flash memory 203. The sky-area determining unit 23 then compares the color range with an evaluation value for each area and determines whether the area is a sky area.

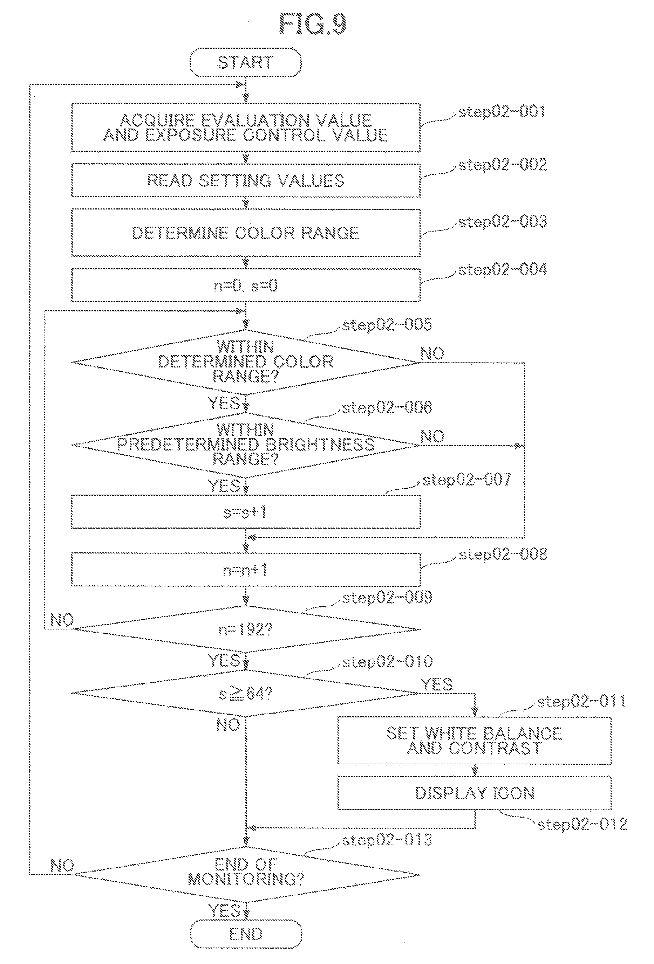

FIG. 9 is a flowchart of a process in which the digital still camera apparatus 100 determines the areas of the blue sky and the sunset glow of sky and then determines a landscape scene based on the size or proportion of the sky area. As in the case of FIG. 5, the process of FIG. 9 is performed during monitoring. The process is described focusing mainly on differences from the process of FIG. 5.

The operations in steps 02-001 to 02-002 are similar to those of steps 01-001 to 01-002 according to Embodiment 1.

In step 02-003, the color range determining unit 27 of the system control unit 02 determines a color range based on the region and date/time (read in step 02-002) and by referring to the color range setting table.

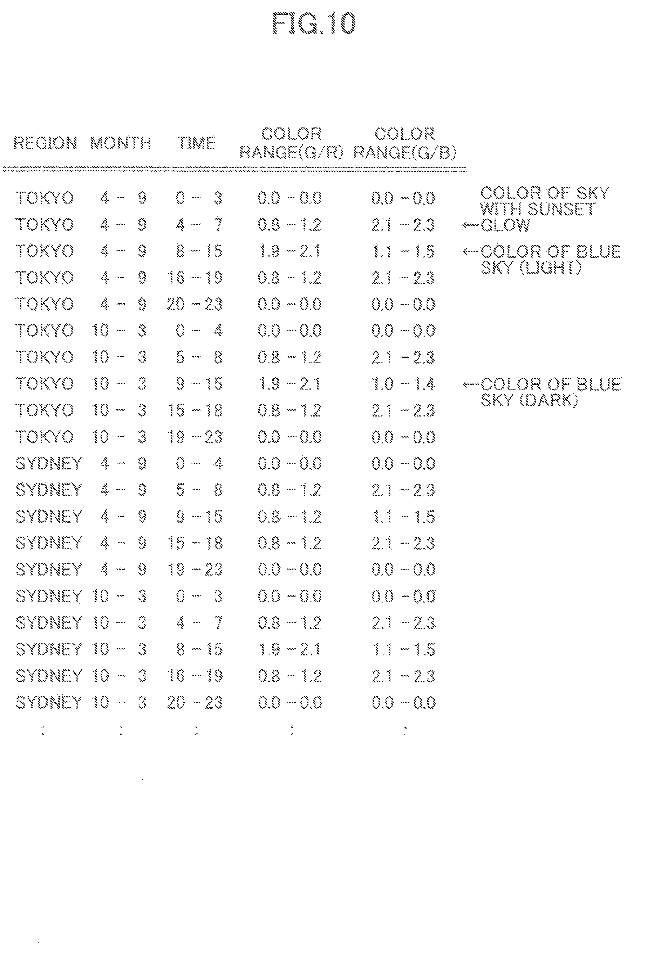

FIG. 10 illustrates an example of the color range setting table. The color range setting table may be stored in the system control unit 02 in advance. The color range setting table registers a "color range G/R)" and a "color range (G/B)" in association with the "region", "month", and "time".

The "region" indicates the region setting (which is a city name in the present embodiment) stored in the NAND flash memory 203. The "month" indicates the month according to the date/time information. The "time" indicates the time according to the date/time information counted by the clock (RTC 204). The "color range" is determined by the region, the month, and the time with respect to "G/R" and "G/B". The "color range" is an indication of the sky color in a given region, in a certain month, and in a certain time band.

The color range setting table registers a color range of colors indicating the sunset glow of sky (which may be referred to as "sunrise glow" depending on the time band; according to the present embodiment, the "sunset glow" may include the "sunrise glow") when the time of photography is near the sunrise or sunset in a given region, and a color range of the blue sky when the time of photography is the daytime in the region. For example, the time "4-7" in the months of "4-9" in Tokyo is associated with the color range (G/R) of 0.8 to 1.2 and the color range (G/B) of 2.1 to 2.3, indicating the color range of sunset glow. The time "8-15" in the months of "4-9" in Tokyo is associated with the color range (G/R) of 1.9 to 2.1 and the color range (G/B) of 1.1 to 1.5, indicating the color range of blue sky colors.

The color range setting table also registers the color range "0-0" when the time of photography corresponds to the night between sunset and sunrise. Thus, the sky-area determining unit 23 can be prevented from erroneously detecting a blue subject as corresponding to the sky.

The color range setting table also registers a dark-blue color range for the daytime color range for the months of winter in a given region and a light-blue color range for the daytime color range for the months of summer in the region. For example, the time "8-15" in the months "4-9" in Tokyo is associated with the color range (G/R) of 1.9 to 2.1 and the color range (G/B) of 1.1 to 1.5, indicating the light-blue color range. The time "9-15" in the months of "10 to 3" in Tokyo is associated with the color range (G/R) of 1.9-2.1 and the color range (G/B) of 1.0 to 1.4, indicating the dark-blue color range.

Referring back to FIG. 9, the sky area counting unit 24 of the system control unit 02 then initializes the number "n" of the areas and the number "s" of the areas estimated to correspond to the sky, as in the case of Embodiment 1 (step 02-004).

The sky-area determining unit 23 then determines whether the evaluation value of the area obtained in step 02-001 is within the color range determined from the color range setting table (step 02-005) .

The values of G/R and G/B are determined from the evaluation value of the area according to the following expressions:

$$G/R = \text{Average value of G pixels / average value of R pixels}$$

$$G/B = \text{Average value of G pixels / average value of B pixels}$$

The sky-area determining unit 23 of the system control unit 02 determines whether the values of both G/R and G/B are within the color ranges obtained from the color range setting table.

Similarly, the sky-area determining unit 23 of the system control unit 02 determines from the evaluation value obtained in step 02-001 whether the brightness E of the area is within a predetermined range (step 02-006).

The brightness E may be calculated by the same method as for Embodiment 1; namely,
E = ((average value of R pixels X 3 + average value of G pixels X 6 + average value of B pixels) / 10) X (inverse of exposure time) X (aperture value (F number)) X (aperture value (F number)) / (ISO sensitivity)

In accordance with the present embodiment, the predetermined range of brightness E is between 8000 and 56000. The brightness values between 8000 and 56000 correspond to a brightness range that is not associated at least with the night sky.

The subsequent processes are similar to those of Embodiment 1. Namely, the system control unit 02 performs the steps 02-005 through 02-008 for all of the 192 areas (step 01-009). When the number "s" is equal to or more than the predetermined value 64, the landscape scene determining unit 25 determines that the scene is a landscape. The system control unit 02 then sets white balance and contrast values suitable for a landscape photography in the image processing unit 04 (step 02-011). The system control unit 02 also causes the display control unit 05 to display guidance graphics (icons) indicating to the user that the scene is a landscape scene (step 02-012).

Thus, in accordance with the present embodiment, the digital still camera apparatus 100 determines whether the color of an area corresponds to a sky color not by referring to a fixed color range but based on a sky color range that is determined depending on the location (region), season (month), and time of photography. Thus, whether the captured image contains the sky can be accurately determined.

In addition, because the color range is set to "0-0" for the nighttime bands, erroneous detection of a blue or red subject as corresponding to the sky can be prevented.

(Combined determination of blue sky and sunset glow)

While the sky with sunset glow and the blue sky are separately determined depending on the time band in the foregoing embodiment, the sky with sunset glow and the blue sky may be both determined in the same time band.

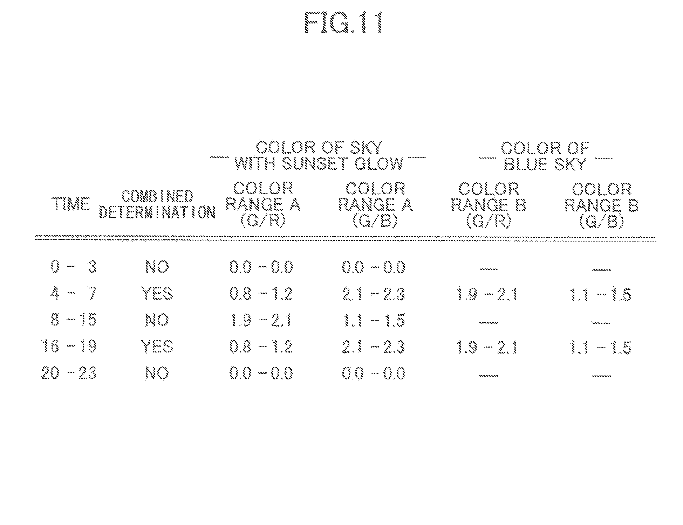

FIG. 11 is another example of the color range setting table. The example of FIG. 11 corresponds to the portion of FIG. 10 for the months of 4-9 in the Tokyo region.

The table of FIG. 11 differs from FIG. 10 in that the item "combined determination" and the two color ranges A and B are registered. The "combined determination" indicates either "Yes" or "No". When a given time band is associated with the combined determination "Yes", an area is determined to be a sky area when the color of the area is within the color range A or the color range B. For example, in the case of the time band "4-7" in Tokyo, a color range corresponding to the sunset glow of sky is set in the color range A, and a color range corresponding to the blue sky is set in the color range B.

By thus registering the color ranges in the color range setting table, the sky that includes both the sunset glow and the blue sky in a time band close to the sunrise or sunset at the time of photography can be determined, so that the accuracy of sky determination can be increased.

Embodiment 3

In Embodiment 1, an area is determined to have the brightness of the sky by using a brightness range table. In Embodiment 2, an area is determined to have a sky color by using a color range setting table. In accordance with Embodiment 3, the digital still camera apparatus 100 makes a determination based on a combination of a brightness range and a color range.

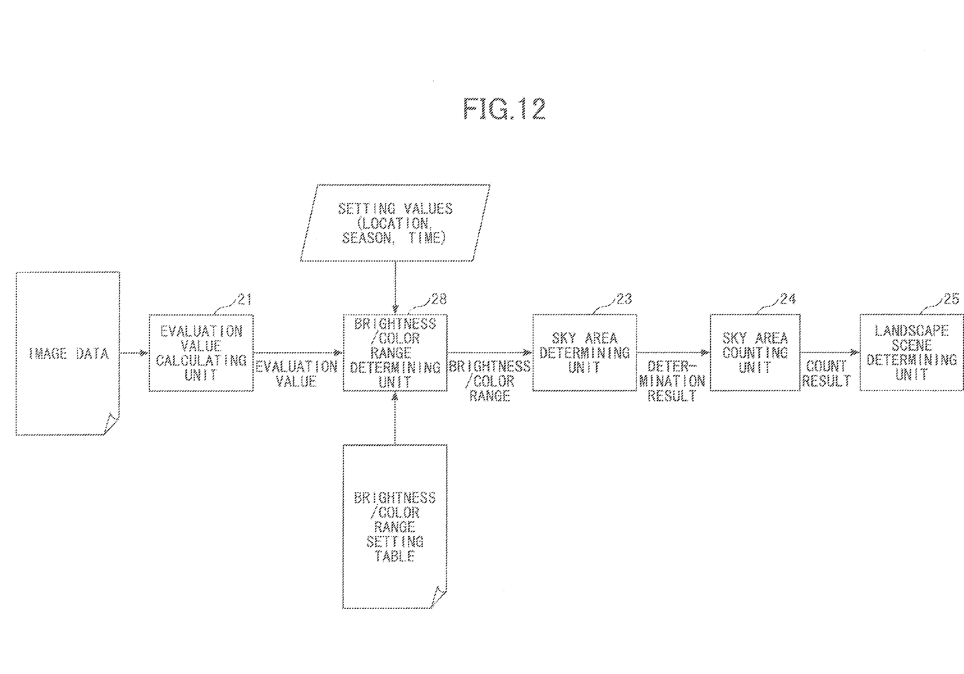

FIG. 12 is a functional block diagram of the digital still camera apparatus 100. In FIG. 12, description of parts or units similar to those of FIG. 4 is omitted. FIG. 12 differs from FIG. 4 in that the brightness range table is replaced with a brightness/color range setting table and that the brightness range determining unit 22 is replaced with a brightness/color range determining unit 28.

The brightness/color range determining unit 28 acquires from the brightness/color range setting table a color range and a brightness range corresponding to a setting value read from the NAND flash memory 203. The sky-area determining unit 23 compares the brightness range and the color range with an evaluation value of the corresponding area and determines whether the area is a sky area.

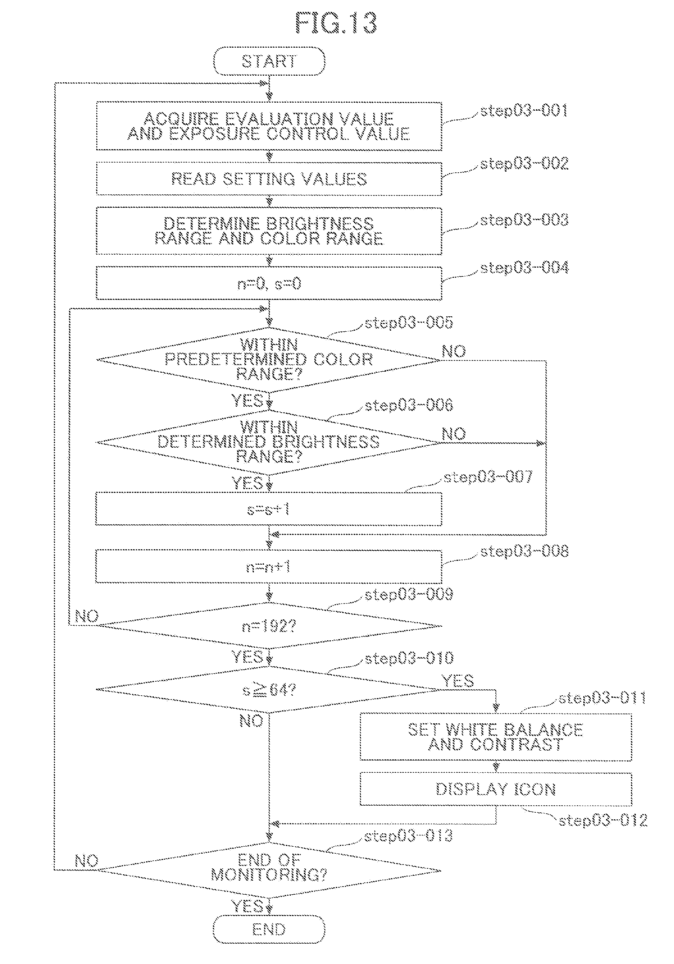

FIG. 13 is a flowchart of a process in which the digital still camera apparatus 100 determines the areas of the blue sky and the sunset glow sky, and determines a landscape scene based on the size or proportion of the sky area. As in the case of FIG. 5, the process of FIG. 13 is performed during monitoring. Thus, the process of FIG. 13 indicates the operation during monitoring. In the following, the process of FIG. 13 is described focusing mainly on differences from the process of FIG. 5.

The operations in steps 03-001 to 03-002 are similar to those of steps 01-001 to 01-002 of Embodiment 1.

In step 03-003, the brightness/color range determining unit 28 of the system control unit 02 reads from the brightness/color range table a brightness range and a color range that correspond to the region and date/time (setting values read in step 03-002).

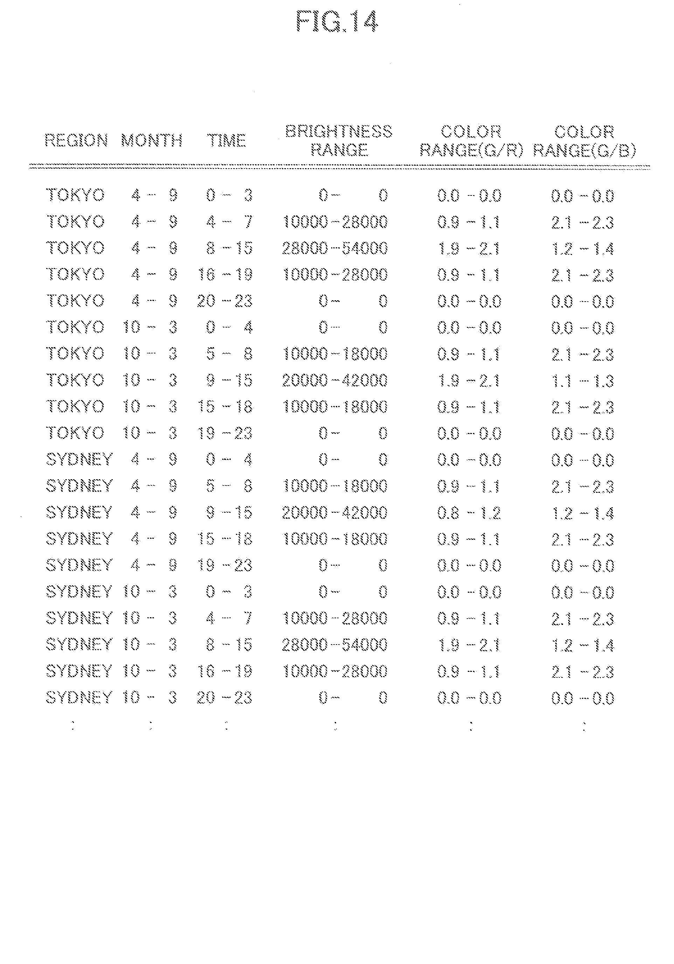

FIG. 14 illustrates an example of the brightness/color range setting table. The brightness/color range setting table may be stored in the system control unit 02 in advance. The brightness/color range setting table registers a "brightness range", a "color range (G/R)", and a "color range (G/B)" in association with the "region", the "month", and the "time".

The "region" indicates the region setting (which is a city name in the present embodiment) stored in the NAND flash memory 203. The "month" indicates the month according to the date/time information. The "time" is the time according to the date/time information counted by the clock (RTC 204). The "brightness range" indicates the range of brightness determined by the region, the month, and the time. The "color range" is determined by the region, the month, and the time with respect to G/R and G/B.

The "brightness range" of the brightness/color range setting table registers smaller values for time bands close to sunrise or sunset and larger values for the daytime at the time of photography in a given region. Further, in addition to the brightness range, a color range of sunset glow colors is registered for the time band close to sunrise or sunset and a color range of blue sky for the daytime band at the time of photography in a given region.

When the time of photography is the night time between sunset and sunrise, values "0-0" are registered in both the brightness range and the color range. Thus, erroneous detection of a bright subject or a blue subject as corresponding to the sky can be prevented.

While the brightness/color range setting table may appear close to a combination of the brightness range table and the color range setting table, the brightness/color range setting table may have narrower brightness ranges than those of the brightness range table and narrower color ranges than those of the color range setting table. The brightness and color ranges can be limited more narrowly because they are both determined based on the location (region), the season (month), and the time of photography. Thus, in accordance with the present embodiment, the accuracy of sky determination can be further increased over Embodiments 1 and 2.

Referring back to FIG. 13, the sky area counting unit 24 of the system control unit 02 initializes the number "n" of the areas and the number "s" of the areas estimated to correspond to the sky, as in Embodiment 1 (step 03-004).

Further, the sky-area determining unit 23 determines whether the brightness of the area is within the brightness range determined from the brightness/color range setting table, based on the evaluation value obtained in step 03-001 (step 03-005).

The sky-area determining unit 23 then determines whether the color of the area is within the color range determined from the brightness/color range setting table, based on the evaluation value obtained in step 03-001 (step 03-006).

When the brightness of the area is within the brightness range and the color of the area is also within the color range, the sky-area determining unit 23 determines that the area is a sky area.

The subsequent processes are similar to those of Embodiment 1. Namely, the system control unit 02 performs the processes of steps 03-005 through 03-008 for all of the 192 areas (step 03-009). When the number "s" is equal to or more than the predetermined value 64, the landscape scene determining unit 25 determines that the photographed scene is a landscape. The system control unit 02 then sets white balance and contrast values suitable for landscape photography in the image processing unit 04 (step 03-011), and also causes the display control unit 05 to display guidance graphics (icons) indicating to the user that the scene is a landscape scene (step 03-012).

Thus, in accordance with the present embodiment, in addition to providing the effects according to Embodiments 1 and 2, the digital still camera apparatus 100 can perform the determination of whether the captured image contains the sky more accurately because of the narrower ranges of brightness and color in the brightness/color range setting table.

Further, because the brightness range and the color range are both set to "0-0" in the nighttime bands, erroneous detection of a bright subject, a blue subject, or a red subject as corresponding to the sky can be prevented.

Preferably, in the present embodiment, the color ranges for the sunset glow and the blue sky may be registered in the same time band in the brightness/color range setting table. In this way, an area that includes the colors of both the sunset glow and the blue sky can be determined to be a sky area, as in Embodiment 2.

Embodiment 4

Variations which may be commonly applied to Embodiments 1 through 3 are described.

(Region setting)

In Embodiments 1 through 3, the brightness range and the color range are determined by utilizing the region setting. Preferably, instead of the region setting, the language setting may be used to determine the brightness range or the color range. As described above, during the startup operation, the user may operate various keys or dials prior to taking a picture in order to set the region in which the picture is taken or the current date/time. At this time, the user may also set the language.

The system control unit 02 reads the language setting from the NAND flash memory 203 prior to monitoring, and estimates the region from the language. For example, a correspondence table of language and region is stored in the NAND flash memory 203.

(Determination of brightness and color ranges)

In Embodiments 1 through 3, the brightness range and the color range are determined depending on the region by using various tables. Preferably, the brightness range or the color range may be calculated from the region without using tables, as described below.

(i) First, the system control unit 02 determines the latitude and longitude of the center of a region based on the region setting.
(ii) The solar altitude at the date/time of photography is calculated.
(iii) The brightness range or the color range is determined from the solar altitude.

In (iii), a table of brightness ranges or color ranges corresponding to the solar altitude may be utilized. Alternatively, a corresponding range may be determined by calculation based on the solar altitude.

The solar altitude may be calculated from the latitude, the longitude, and the date/time by a method well-known in the art. When the latitude, the longitude, and the date/time are known, the solar orientation $\phi$, the height $\alpha$, and the extra-atmospheric amount of global solar radiation Q at a given site of latitude $\phi$ and longitude $\lambda$ at a given date/time can be determined by calculation.

First, the declination of the sun $\delta$, the geocentric solar distance r/r*, and the equation of time Eq of a given day are determined by using $\theta$o, which is determined based on a consecutive number of days dn from the first day of the year, according to the following expression:

$$\theta o = 2\pi(dn-1)/365 \quad \delta = 0.006918 - 0.399912\cos(\theta o)$$
$$+ 0.070257\sin(\theta o) - 0.006758\cos(2\theta o) + 0.000907\sin(2\theta o) - 0.002697\cos(3\theta o) + 0.001480\sin(3\theta o)$$

$$r/r^* = 1/\{1.000110 + 0.034221\cos(\theta o) + 0.001280\sin(\theta o) + 0.000719\cos(2\theta o) + 0.000077\sin(2\theta o)\}^{\wedge}0.5$$

$$Eq = 0.000075 + 0.001868\cos(\theta o) - 0.032077\sin(\theta o) - 0.014615\cos(2\theta o) - 0.040849\sin(2\theta o)$$

From the Japan Standard Time (JST), the hour angle h of the sun is determined.

$$h = (JST - 12)\pi/12 + \text{longitudinal difference}$$
$$\text{from the standard meridian + equation of time (Eq)}$$

Based on the values of the declination of the sun $\delta$, the latitude $\phi$, and the hour angle h which are now known, the solar orientation $\phi$ and the height $\alpha$ are determined as follows:

$$\alpha = \arcsin\{\sin(\phi)\sin(\delta) + \cos(\phi)\cos(\delta)\cos(h)\}$$

$$\phi = \texttt{arctan[cos}(\phi)\texttt{cos}(\delta)\texttt{sin(h)} \texttt{ / \{sin}(\phi)\texttt{sin}(\alpha)$$

$$- \texttt{ sin}(\delta)\}]$$

(Region setting)

In Embodiments 1 through 3, the user sets the region and language in the startup operation. When the digital still camera apparatus 100 is equipped with a GPS (global positioning system) function, the brightness range or the color range may be determined based on information of latitude, longitude, and time obtained from a GPS satellite.

(Weighted determination of sky area)

In Embodiments 1 through 3, it is determined whether the captured image is a landscape scene based on whether the number s of areas estimated to correspond to the sky area is equal to or more than a predetermined value (64). During such determination, the areas corresponding to an upper part of an image on the LCD 06 may be weighted. For example, the evaluation values for the upper areas are multiplied by a value greater than one. Because the sky areas are normally located at an upper part of an image of an imaging signal, the accuracy of sky determination can be increased by such weighting.

Preferably, when the imaging apparatus is equipped with a gravity sensor (acceleration sensor), the direction of the imaging apparatus may be determined so that the areas in an upper part of the image (opposite to the direction of gravity) can be weighted. While the user may be able to vary the direction of the camera vertically or horizontally, the vertical/horizontal correspondence between the captured image data and the subject can be detected by the gravity sensor. Thus, the accuracy of detection of the sky areas can be increased by such weighting regardless of the direction of the digital still camera apparatus 100.

(Applications other than digital still camera apparatus)

The determination of a landscape described above may be applied not only to the digital still camera apparatus 100 but also to any apparatus having an imaging unit that generates an imaging signal based on photoelectric conversion of incident light. Examples of such an apparatus include digital video camera apparatuses, portable phones, smartphones, and Web cameras. The name of the apparatus is not limited.

Although this invention has been described in detail with reference to certain embodiments, variations and modifications exist within the scope and spirit of the invention as described and defined in the following claims.

**Claims**

1.   An imaging apparatus comprising:

an imaging unit for converting incident light into an image signal;
an evaluation value detecting unit for dividing the image signal into plural areas and detecting an evaluation value of a pixel value of each of the areas;
an imaging information acquiring unit for acquiring imaging position information and an imaging date/time of the image signal;
a sky-area pixel value estimating unit for estimating pixel value information of a sky area of a daytime based on the imaging position information and the imaging date/time; and
a sky-area determination unit for comparing the evaluation value of each of the plural areas with the pixel value information to determine whether the area corresponds to the sky area.

2.   The imaging apparatus according to claim 1, wherein the sky-area pixel value estimating unit estimates brightness information of the sky area as the pixel value information based on the imaging position information and the imaging date/time, and
wherein the sky-area determination unit determines whether the area corresponds to the sky area by comparing the evaluation value of each of the plural areas with the brightness information.

3.   The imaging apparatus according to claim 1, wherein the sky-area pixel value estimating unit estimates color information of the sky area as the pixel value information based on the imaging position information and the imaging date/time, and

wherein the sky-area determination unit determines whether the area corresponds to the sky area by comparing the evaluation value of each of the plural areas with the color information.

4. The imaging apparatus according to claim 1, wherein the sky-area pixel value estimating unit estimates brightness information and color information of the sky area as the pixel value information based on the imaging position information and the imaging date/time, and

wherein the sky-area determination unit determines whether the area corresponds to the sky area by comparing the evaluation value of each of the plural areas with the brightness information and the color information.

5. The imaging apparatus according to claim 2, further comprising a table that registers the brightness information of the sky area in association with region identifying information and time band information including plural time bands of a day,

wherein the sky-area pixel value estimating unit reads the brightness information corresponding to the imaging position information and the imaging date/time from the table.

6. The imaging apparatus according to claim 3, further comprising a table that registers the color information of the sky area in association with region identifying information and time band information including plural time bands of a day,

wherein the sky-area pixel value estimating unit reads the color information corresponding to the imaging position information and the imaging date/time from the table.

7. The imaging apparatus according to claim 6, wherein the table registers the color information of the sky area of the blue sky and the color information of the sky area of a sunset-glow sky in association with the region identifying information and the time band information including plural time bands of the day,

wherein the sky-area pixel value estimating unit reads the color information of the sky area of the blue sky and the color information of the sky area of the sunset-glow sky that correspond to the imaging position information and the imaging date/time from the table, and

wherein the sky-area determination unit determines that the area corresponds to the sky area when the evaluation value of each of the plural areas substantially corresponds to the color information of the sky area of the blue sky or that of the sky area of the sunset-glow sky.

8. The imaging apparatus according to claim 4, further comprising a table that registers the brightness information and the color information of the sky area in association with region identifying information and time band information including plural time bands of a day,

wherein the sky-area pixel value estimating unit reads the brightness information and the color information corresponding to the imaging position information and the imaging date/time from the table.

9. The imaging apparatus according to any one of claims 5 through 8, wherein the table registers the region identifying information and the time band information on a season information basis.

10. The imaging apparatus according to claim 5 or 8, wherein the table registers the brightness information indicating zero brightness in association with the time band information of a night time.

11. The imaging apparatus according to any one of claims 6 through 8, wherein the table registers the color information indicating a black color in association with the time band information of a night time.

12. The imaging apparatus according to any one of claims 1 through 11, wherein the imaging information acquiring unit reads the imaging position information from a storage unit in which the imaging position information is set in advance or acquire the imaging position information measured by a satellite positioning apparatus, and

wherein the imaging information acquiring unit acquires the imaging date/time from a timer unit.

13. The imaging apparatus according to any one of claims 1 through 12, further comprising a landscape scene determination unit for determining that a photographed scene of the image signal is a landscape scene based on the number of the areas determined to correspond to the sky area by the sky-area determination unit.

14. A sky-area determining method comprising:

an imaging unit converting incident light into an image signal;
an evaluation value detecting unit dividing the image signal into plural areas and detecting an evaluation value for a pixel value of each of the areas;
an imaging information acquiring unit acquiring imaging position information and imaging date/time of the image signal;
a sky-area pixel value estimating unit estimating pixel value information of a sky area of a daytime based on the imaging position information and the imaging date/time by; and
a sky-area determination unit comparing the evaluation value of each of the plural areas with the pixel value information and determining whether the area corresponds to the sky area.

15. A sky-area determining program that causes a computer to which an imaging unit for converting incident light into an image signal and an evaluation value detecting unit for dividing the image signal into plural areas and detecting an evaluation value of a pixel value of each of the areas are connected to perform:

an imaging information acquiring step of acquiring imaging position information and an imaging date/time of the image signal;
a sky-area pixel value estimating step of estimating pixel value information of a sky area of a daytime based on the imaging position information and the imaging date/time; and
a sky area determining step of comparing the evaluation value of each of the plural areas with the pixel value information and determining whether the area corresponds to the sky area.

# FIG.1

```
                    START

                         │
                         ▼
        ┌────────────────────────────────┐  S1
        │        ENTER SETTINGS           │
        │  (LOCATION, SEASON, TIME)       │
        └────────────────────────────────┘
                         │
                         ▼
        ┌────────────────────────────────┐  S2
        │   DETERMINE BRIGHTNESS RANGE    │
        └────────────────────────────────┘
                         │
                         ▼
        ┌────────────────────────────────┐  S3
        │       DETERMINE SKY AREA        │
        └────────────────────────────────┘
                         │
                         ▼
        ┌────────────────────────────────┐  S4
        │        COUNT SKY AREAS          │
        └────────────────────────────────┘
                         │
                         ▼
        ┌────────────────────────────────┐  S5
        │   DETERMINE LANDSCAPE SCENE     │
        └────────────────────────────────┘
                         │
                         ▼
                      END
```

FIG.2

EP 2 424 227 A2

Figure showing block diagram with components: COMMUNICATION INTERFACE UNIT (10), HARDWARE KEY INTERFACE UNIT (09), IMAGING UNIT (03), LCD (06), DISPLAY CONTROL UNIT (05), IMAGE PROCESSING UNIT (04), RECORDING MEDIUM (08), RECORDING MEDIA INTERFACE UNIT (07), SYSTEM CONTROL (02) with PROGRAM (20), main unit (100), and external computer (11).

FIG.3

EP 2 424 227 A2

FIG.4

EP 2 424 227 A2

## FIG.5

START

ACQUIRE EVALUATION VALUE
AND EXPOSURE CONTROL VALUE — step01-001

READ SETTING VALUES — step01-002

DETERMINE BRIGHTNESS RANGE — step01-003

n=0, s=0 — step01-004

step01-005

WITHIN
PREDETERMINED COLOR
RANGE? — NO

YES

WITHIN
DETERMINED BRIGHTNESS
RANGE? — step01-006 — NO

YES

s=s+1 — step01-007

n=n+1 — step01-008

step01-009

NO — n=192?

YES

s≧64? — step01-010 — YES

NO

SET WHITE BALANCE
AND CONTRAST — step01-011

DISPLAY ICON

step01-012

step01-013

NO — END OF
MONITORING?

YES

END

# FIG.6

# FIG.7

| REGION | MONTH | TIME | BRIGHTNESS RANGE |
|--------|-------|------|------------------|
| TOKYO | 4 – 9 | 0 – 3 | 0 – 0 |
| TOKYO | 4 – 9 | 4 – 7 | 8000 – 30000 |
| TOKYO | 4 – 9 | 8 – 15 | 26000 – 56000 |
| TOKYO | 4 – 9 | 16 – 19 | 8000 – 30000 |
| TOKYO | 4 – 9 | 20 – 23 | 0 – 0 |
| TOKYO | 10 – 3 | 0 – 4 | 0 – 0 |
| TOKYO | 10 – 3 | 5 – 8 | 8000 – 20000 |
| TOKYO | 10 – 3 | 9 – 15 | 18000 – 44000 |
| TOKYO | 10 – 3 | 15 – 18 | 8000 – 20000 |
| TOKYO | 10 – 3 | 19 – 23 | 0 – 0 |
| SYDNEY | 4 – 9 | 0 – 4 | 0 – 0 |
| SYDNEY | 4 – 9 | 5 – 8 | 8000 – 20000 |
| SYDNEY | 4 – 9 | 9 – 15 | 18000 – 44000 |
| SYDNEY | 4 – 9 | 15 – 18 | 8000 – 20000 |
| SYDNEY | 4 – 9 | 19 – 23 | 0 – 0 |
| SYDNEY | 10 – 3 | 0 – 3 | 0 – 0 |
| SYDNEY | 10 – 3 | 4 – 7 | 8000 – 30000 |
| SYDNEY | 10 – 3 | 8 – 15 | 26000 – 56000 |
| SYDNEY | 10 – 3 | 16 – 19 | 8000 – 30000 |
| SYDNEY | 10 – 3 | 20 – 23 | 0 – 0 |

## FIG.8

SETTING VALUES
(LOCATION,
SEASON, TIME)

IMAGE DATA → EVALUATION VALUE CALCULATING UNIT (21) → EVALUATION VALUE → COLOR RANGE DETERMINING UNIT (27) → COLOR RANGE → SKY AREA DETERMINING UNIT (23) → DETERMINATION RESULT → SKY AREA COUNTING UNIT (24) → COUNT RESULT → LANDSCAPE SCENE DETERMINING UNIT (25)

COLOR RANGE SETTING TABLE

EP 2 424 227 A2

## FIG.9

```
                    ┌─────────────┐
                    │    START    │
                    └──────┬──────┘
                           ↓
        ┌──────────────────────────────────┐
        │   ACQUIRE EVALUATION VALUE        │──── step02-001
        │   AND EXPOSURE CONTROL VALUE      │
        └──────────────────┬───────────────┘
                           ↓
        ┌──────────────────────────────────┐
        │      READ SETTING VALUES         │──── step02-002
        └──────────────────┬───────────────┘
                           ↓
        ┌──────────────────────────────────┐
        │     DETERMINE COLOR RANGE        │──── step02-003
        └──────────────────┬───────────────┘
                           ↓
        ┌──────────────────────────────────┐
        │           n=0, s=0               │──── step02-004
        └──────────────────┬───────────────┘
                           ↓
                    step02-005
                ◇ WITHIN              NO
                  DETERMINED COLOR ─────────┐
                  RANGE? ◇                   │
                     YES↓  step02-006        │
                ◇ WITHIN               NO    │
                  PREDETERMINED ──────────┐  │
                  BRIGHTNESS RANGE? ◇     │  │
                     YES↓  step02-007     │  │
        ┌──────────────────────────┐     │  │
        │          s=s+1           │     │  │
        └──────────────┬───────────┘     │  │
                       ↓←────────────────┘──┘
        ┌──────────────────────────┐
        │          n=n+1           │──── step02-008
        └──────────────┬───────────┘
                       ↓  step02-009
            NO    ◇  n=192? ◇
        ┌─────────────
                       YES↓  step02-010
                 ◇  s≧64? ◇          YES
                                    ┌──────────
                       NO            ↓   step02-011
                        ┌────────────────────────┐
                        │   SET WHITE BALANCE     │
                        │     AND CONTRAST        │
                        └───────────┬────────────┘
                                    ↓
                        ┌────────────────────────┐
                        │      DISPLAY ICON       │
                        └───────────┬────────────┘
                                    step02-012
                       ↓←───────────┘
            NO    ◇ END OF          step02-013
        ┌──────── MONITORING? ◇
                       YES↓
                ┌─────────────┐
                │     END     │
                └─────────────┘
```

# FIG.10

| REGION | MONTH | TIME | COLOR RANGE(G/R) | COLOR RANGE(G/B) | |
|--------|-------|------|------------------|------------------|---|
| TOKYO | 4 - 9 | 0 - 3 | 0.0 - 0.0 | 0.0 - 0.0 | COLOR OF SKY WITH SUNSET |
| TOKYO | 4 - 9 | 4 - 7 | 0.8 - 1.2 | 2.1 - 2.3 | ←GLOW |
| TOKYO | 4 - 9 | 8 - 15 | 1.9 - 2.1 | 1.1 - 1.5 | ←COLOR OF BLUE SKY (LIGHT) |
| TOKYO | 4 - 9 | 16 - 19 | 0.8 - 1.2 | 2.1 - 2.3 | |
| TOKYO | 4 - 9 | 20 - 23 | 0.0 - 0.0 | 0.0 - 0.0 | |
| TOKYO | 10 - 3 | 0 - 4 | 0.0 - 0.0 | 0.0 - 0.0 | |
| TOKYO | 10 - 3 | 5 - 8 | 0.8 - 1.2 | 2.1 - 2.3 | |
| TOKYO | 10 - 3 | 9 - 15 | 1.9 - 2.1 | 1.0 - 1.4 | ←COLOR OF BLUE SKY (DARK) |
| TOKYO | 10 - 3 | 15 - 18 | 0.8 - 1.2 | 2.1 - 2.3 | |
| TOKYO | 10 - 3 | 19 - 23 | 0.0 - 0.0 | 0.0 - 0.0 | |
| SYDNEY | 4 - 9 | 0 - 4 | 0.0 - 0.0 | 0.0 - 0.0 | |
| SYDNEY | 4 - 9 | 5 - 8 | 0.8 - 1.2 | 2.1 - 2.3 | |
| SYDNEY | 4 - 9 | 9 - 15 | 0.8 - 1.2 | 1.1 - 1.5 | |
| SYDNEY | 4 - 9 | 15 - 18 | 0.8 - 1.2 | 2.1 - 2.3 | |
| SYDNEY | 4 - 9 | 19 - 23 | 0.0 - 0.0 | 0.0 - 0.0 | |
| SYDNEY | 10 - 3 | 0 - 3 | 0.0 - 0.0 | 0.0 - 0.0 | |
| SYDNEY | 10 - 3 | 4 - 7 | 0.8 - 1.2 | 2.1 - 2.3 | |
| SYDNEY | 10 - 3 | 8 - 15 | 1.9 - 2.1 | 1.1 - 1.5 | |
| SYDNEY | 10 - 3 | 16 - 19 | 0.8 - 1.2 | 2.1 - 2.3 | |
| SYDNEY | 10 - 3 | 20 - 23 | 0.0 - 0.0 | 0.0 - 0.0 | |
| : | : | : | : | : | |

24

# FIG.11

| TIME | COMBINED DETERMINATION | COLOR OF SKY WITH SUNSET GLOW | | COLOR OF BLUE SKY | |
|---|---|---|---|---|---|
| | | COLOR RANGE A (G/R) | COLOR RANGE A (G/B) | COLOR RANGE B (G/R) | COLOR RANGE B (G/B) |
| 0 – 3 | NO | 0.0 – 0.0 | 0.0 – 0.0 | — | — |
| 4 – 7 | YES | 0.8 – 1.2 | 2.1 – 2.3 | 1.9 – 2.1 | 1.1 – 1.5 |
| 8 – 15 | NO | 1.9 – 2.1 | 1.1 – 1.5 | — | — |
| 16 – 19 | YES | 0.8 – 1.2 | 2.1 – 2.3 | 1.9 – 2.1 | 1.1 – 1.5 |
| 20 – 23 | NO | 0.0 – 0.0 | 0.0 – 0.0 | — | — |

FIG.12

SETTING VALUES
(LOCATION,
SEASON, TIME)

IMAGE DATA → EVALUATION VALUE CALCULATING UNIT (21) — EVALUATION VALUE → BRIGHTNESS /COLOR RANGE DETERMINING UNIT (28) — BRIGHTNESS /COLOR RANGE → SKY AREA DETERMINING UNIT (23) — DETER- MINATION RESULT → SKY AREA COUNTING UNIT (24) — COUNT RESULT → LANDSCAPE SCENE DETERMINING UNIT (25)

BRIGHTNESS /COLOR RANGE SETTING TABLE

EP 2 424 227 A2

# FIG.13

```
              ┌─────────┐
              │  START  │
              └─────────┘
                   │
                   ▼
    ┌──────────────────────────────────┐
    │   ACQUIRE EVALUATION VALUE        │── step03-001
    │  AND EXPOSURE CONTROL VALUE       │
    └──────────────────────────────────┘
                   │
                   ▼
    ┌──────────────────────────────────┐
    │       READ SETTING VALUES         │── step03-002
    └──────────────────────────────────┘
                   │
                   ▼
    ┌──────────────────────────────────┐
    │     DETERMINE BRIGHTNESS          │── step03-003
    │    RANGE AND COLOR RANGE          │
    └──────────────────────────────────┘
                   │
                   ▼
    ┌──────────────────────────────────┐
    │           n=0, s=0                │── step03-004
    └──────────────────────────────────┘
                   │
                   ▼
              step03-005
           ◇ WITHIN           ◇── NO
         PREDETERMINED COLOR
             RANGE?
              YES │
                  ▼        step03-006
           ◇ WITHIN           ◇── NO
         DETERMINED BRIGHTNESS
             RANGE?
              YES │
                  ▼     step03-007
    ┌──────────────────────────────────┐
    │           s=s+1                   │
    └──────────────────────────────────┘
                  │
                  ▼
    ┌──────────────────────────────────┐
    │           n=n+1                   │── step03-008
    └──────────────────────────────────┘
                  │
                  ▼    step03-009
       NO ──◇   n=192?   ◇
              YES │
                  ▼   step03-010
           ◇   s≧64?   ◇── YES
              NO │              │
                 │              ▼    step03-011
                 │   ┌────────────────────────┐
                 │   │  SET WHITE BALANCE      │
                 │   │    AND CONTRAST         │
                 │   └────────────────────────┘
                 │              │
                 │              ▼
                 │   ┌────────────────────────┐
                 │   │     DISPLAY ICON        │── step03-012
                 │   └────────────────────────┘
                 │              │
                 ▼              ▼
              step03-013
       NO ──◇  END OF   ◇
           MONITORING?
              YES │
                  ▼
              ┌─────────┐
              │   END   │
              └─────────┘
```

# FIG.14

| REGION | MONTH | TIME | BRIGHTNESS RANGE | COLOR RANGE(G/R) | COLOR RANGE(G/B) |
|---|---|---|---|---|---|
| TOKYO | 4 - 9 | 0 - 3 | 0 - 0 | 0.0 - 0.0 | 0.0 - 0.0 |
| TOKYO | 4 - 9 | 4 - 7 | 10000 - 28000 | 0.9 - 1.1 | 2.1 - 2.3 |
| TOKYO | 4 - 9 | 8 - 15 | 28000 - 54000 | 1.9 - 2.1 | 1.2 - 1.4 |
| TOKYO | 4 - 9 | 16 - 19 | 10000 - 28000 | 0.9 - 1.1 | 2.1 - 2.3 |
| TOKYO | 4 - 9 | 20 - 23 | 0 - 0 | 0.0 - 0.0 | 0.0 - 0.0 |
| TOKYO | 10 - 3 | 0 - 4 | 0 - 0 | 0.0 - 0.0 | 0.0 - 0.0 |
| TOKYO | 10 - 3 | 5 - 8 | 10000 - 18000 | 0.9 - 1.1 | 2.1 - 2.3 |
| TOKYO | 10 - 3 | 9 - 15 | 20000 - 42000 | 1.9 - 2.1 | 1.1 - 1.3 |
| TOKYO | 10 - 3 | 15 - 18 | 10000 - 18000 | 0.9 - 1.1 | 2.1 - 2.3 |
| TOKYO | 10 - 3 | 19 - 23 | 0 - 0 | 0.0 - 0.0 | 0.0 - 0.0 |
| SYDNEY | 4 - 9 | 0 - 4 | 0 - 0 | 0.0 - 0.0 | 0.0 - 0.0 |
| SYDNEY | 4 - 9 | 5 - 8 | 10000 - 18000 | 0.9 - 1.1 | 2.1 - 2.3 |
| SYDNEY | 4 - 9 | 9 - 15 | 20000 - 42000 | 0.8 - 1.2 | 1.2 - 1.4 |
| SYDNEY | 4 - 9 | 15 - 18 | 10000 - 18000 | 0.9 - 1.1 | 2.1 - 2.3 |
| SYDNEY | 4 - 9 | 19 - 23 | 0 - 0 | 0.0 - 0.0 | 0.0 - 0.0 |
| SYDNEY | 10 - 3 | 0 - 3 | 0 - 0 | 0.0 - 0.0 | 0.0 - 0.0 |
| SYDNEY | 10 - 3 | 4 - 7 | 10000 - 28000 | 0.9 - 1.1 | 2.1 - 2.3 |
| SYDNEY | 10 - 3 | 8 - 15 | 28000 - 54000 | 1.9 - 2.1 | 1.2 - 1.4 |
| SYDNEY | 10 - 3 | 16 - 19 | 10000 - 28000 | 0.9 - 1.1 | 2.1 - 2.3 |
| SYDNEY | 10 - 3 | 20 - 23 | 0 - 0 | 0.0 - 0.0 | 0.0 - 0.0 |
| : | : | : | : | : | : |

REFERENCES CITED IN THE DESCRIPTION

**Patent documents cited in the description**

- JP 2009147520 A
- JP 2009089357 A
- JP 2008219128 A